# EUROPÄISCHE PATENTSCHRIFT

(11) **EP 1 916 372 B1**
(45) Veröffentlichungstag und Bekanntmachung des Hinweises auf die Patenterteilung: **28.12.2016**
(21) Anmeldenummer: 07105872.1
(22) Anmeldetag: 10.04.2007
(51) Int. Cl.: E05D 15/06, E06B 3/54, E05D 5/02, B32B 17/10, E06B 3/46

(54) **Vorrichtung zum Halten von Platten und Trennelement**
Holding device for panels and separating element
Dispositif pour le maintien de panneaux et élément de séparation

(30) Priorität: 23.10.2006 EP 06122781
(43) Veröffentlichungstag der Anmeldung: 30.04.2008
(73) Patentinhaber: HAWA AG, 8932 Mettmenstetten (CH)
(72) Erfinder: Haab, Gregor, CH-6340, Baar (CH); Hagger, Stefan, CH-8113, Boppelsen (CH)
(74) Vertreter: Rutz, Peter

(56) Entgegenhaltungen:
- EP-A1- 0 586 840
- WO-A2-02/38902
- DE-A1-102004 007 568

## Beschreibung

Die Erfindung betrifft eine Vorrichtung zum Halten von Platten, insbesondere Glasplatten, sowie ein mit dieser Vorrichtung und einer Platte versehenes Trennelement, das gegebenenfalls mittels eines Laufwerks in einer Schiene geführt ist, nach dem Oberbegriff des Patentanspruchs 1 bzw. 10.

Zum Trennen oder Gestalten von Räumen oder zum Abschliessen von Raum- oder Fensteröffnungen werden oft mit einer Glasplatte versehene Wände, Kulissen, Türen oder Läden verwendet, nachstehend als Trennelemente bezeichnet, die fest montiert oder an entlang einer Schiene verschiebbaren Laufwerken befestigt und gegebenenfalls drehbar gelagert sind.

Eine Vorrichtung zum Halten von Glasplatten ist beispielsweise aus [1], WO 98/59140 A1 bekannt, bei der zwei in eine Ausnehmung in einer Glasplatte einzufügende Befestigungsteile mittels eines Verbindungsteils miteinander verbindbar sind, das durch eine in der Glasplatte vorgesehene Bohrung durchführbar ist und diese daher formschlüssig hält. Die Glasplatte ist dabei mittels eines exzentrischen Justierelements, das in die Bohrung eingeführt wird, justierbar. Dadurch lassen sich Ungenauigkeiten ausgleichen, die bei der Bearbeitung der Glasplatte entstanden sind. Zwischen den beiden Teilen der Vorrichtung, innerhalb der genannten Ausnehmung der Glasplatte, ist eine justierbare Verbindungsschraube gehalten, die mit einem in einer Laufschiene geführten Laufwerk verbunden ist.

Eine weitere Vorrichtung zum Halten einer Glasplatte ist aus [2], EP 0 586840 A1 bekannt. Zur justierbaren Befestigung der Glasplatte in einer Aufnahmenut einer oberen Rahmenleiste weist die Glasplatte beispielsweise in der Nähe der beiden Enden des oberen Randbereichs kreisrunde Löcher auf, durch die Befestigungselemente gesteckt sind. Jedes Befestigungselement besteht aus einem Ankerteil mit einer um eine Justierachse annähernd zylindersymmetrischen Mantelfläche, die mit einer Innenfläche eines auf das Ankerteil aufgesteckten Halteteils verzahnt ist. Das Ankerteil greift mit axial überstehenden Ankerzapfen in seitlich in der Aufnahmenut angebrachte durchgehende Ankernuten ein. Der Rand des Lochs in der Glasplatte berührt das Halteteil an einer äusseren Kontaktfläche, welche um eine zur Justierachse parallele, von ihr um eine Exzentrizität beabstandete Exzenterachse rotationssymmetrisch ist. Das Halteteil kann vom Ankerteil abgezogen und um ein Vielfaches eines Inkrements um die Justierachse verdreht wieder aufgesteckt werden, wodurch sich die vertikale Position der Kontaktfläche bezüglich des Ankerteils und damit die Lage der Glasplatte bezüglich der Rahmenleiste ändert.

Die aus [1] und [2] bekannten Vorrichtungen eignen sich zur Montage von einlagigen Glasplatten, welche im Vergleich zu Verbund-Sicherheits-Glas (VSG) wesentliche Nachteile aufweisen. Einerseits besteht eine Absturzgefahr sowie eine Glasbruchgefahr und aufgrund der frei gesetzten Glassplitter eine zu beachtende Verletzungsgefahr.

Verbund-Sicherheits-Glas (VSG), bei dem die oben beschriebenen Nachteile vermieden werden, setzt sich zusammen aus zwei oder mehreren Glasscheiben, die mittels einer dazwischen liegenden, reissfesten, zähelastischen Zwischenschicht (PVB-Folien) miteinander verbunden sind. Bei einer Überbelastung der mehrschichtigen Platte durch Schlag und Stoss bricht das Glas. Resultierende Bruchstücke bleiben jedoch an der Folie haften (es bildet sich eine Bruchspinne). Die Öffnung bleibt geschlossen und die Durchsicht bleibt weitgehend erhalten.

Verbund-Sicherheits-Glas weist weitere Vorteile auf. Die integrierten Folien können grafisch gestaltet und als Werbe- oder Informationsflächen verwendet werden. Dazu können farbige oder bedruckte Folien zwischen den Glasplatten eingeschlossen werden, welche die Folie zuverlässig schützen. Bei der Verwendung von klarem Glas und klaren Folien ist die Lichtdurchlässigkeit zudem kaum beeinträchtigt.

Nachteilig bei Verbund-Sicherheits-Glas ist jedoch, dass dieses mittels der bekannten Befestigungsvorrichtungen, beispielsweise den aus [1] und [2] bekannten Vorrichtungen kaum montierbar sind.

Dabei ist zu beachten, dass die beiden Glasplatten des Verbund-Sicherheits-Glases normalerweise vorgefertigt und dann mittels der Folie miteinander verbunden werden. Die Löcher oder Ausnehmungen in den Glasplatten liegen nach dem verbinden derselben, aufgrund der Fertigungstoleranzen normalerweise nicht konzentrisch übereinander. Die auftretenden Abweichungen horizontal und vertikal liegen typischerweise in einem Bereich vom maximal 2mm.

Sofern das Verbund-Sicherheits-Glas nun mittels eines zylindrischen Elements gehalten werden soll muss dieses kleiner gewählt werden als der Durchmesser der Löcher oder Ausnehmungen, so dass ein störendes Spiel resultiert. Ferner liegt meist nur eine der beiden Glasplatten auf dem zylindrischen Element auf, so dass innerhalb nur einer der Ausnehmungen eine hohe Belastung nur einer der Glasplatten resultiert. Ferner ist die Justierung nicht einfach realisierbar.

Die WO0238902A2 offenbart eine Verbundscheibe, welche aus wenigstens drei Einzelscheiben besteht, wobei mindestens eine Mittelscheibe von zwei Aussenscheiben eingeschlossen ist. Die Verbundscheibe weist eine alle Einzelscheiben durchdringende Bohrung auf, in die ein schaftförmiges Befestigungselement einsetzbar ist. Der Bohrungsdurchmesser in der Mittelscheibe ist grösser als die Durchmesser der Bohrungen in den Aussenscheiben, in denen je eine Hohlschraube und eine Mutter vorgesehen sind, mittels denen die zugehörige Aussenscheibe festgeklemmt wird. In jeder der Hohlschrauben ist ein Exzenterringpaar vorgesehen, welche dem Ausfluchten der Lochmittenabweichungen der Durchgangsbohrungen in den Aussenscheiben dienen.

Die DE102004007568A1 offenbart eine Vorrichtung zur hängenden Anordnung einer Sicherheitsglasscheibe an einem Trägerprofil, welches einen U-förmigen Querschnitt mit einem Verbindungssteg beidseitig nach unten abstehenden Seitenstegen aufweist. Im Bereich des oberen Endes der Sicherheitsglasscheibe sind an ihren beiden Seitenflächen Halteprofile angeklebt. Der vorliegenden Erfindung liegt daher die Aufgabe zugrunde, eine Vorrichtung anzugeben, mittels der eine aus zwei miteinander verbundenen Glasplatten gebildete Verbundglasplatte, gegebenenfalls eine Verbund-Sicherheits-Glas-Platte unter Vermeidung der oben beschriebenen Nachteile in einem Rahmenelement montierbar ist, das gegebenenfalls mit einem in einer Schiene geführten Laufwerk verbunden ist.

Insbesondere ist eine Vorrichtung anzugeben, mittels der die beiden Glasplatten der Verbundglasplatte und somit die Verbundglasplatte selbst spielfrei montierbar sind.

Ferner ist eine Vorrichtung anzugeben, bei der die lokal auf die beiden Glasplatten der Verbundglasplatte einwirkenden Kräfte gleichmässig verteilt und so gering wie möglich sind. Ferner ist ein Trennelement anzugeben, welches eine erfindungsgemäss mit einem Rahmenelement verbundene Verbundglasplatte aufweist.

Diese Aufgabe wird mit einer Vorrichtung und einem Trennelement gelöst welche die in Anspruch 1 und 9 angegebenen Merkmale aufweist. Vorteilhafte Ausgestaltungen der Erfindung sind in weiteren Ansprüchen angegeben.

Die Vorrichtung, die der justierbaren Befestigung einer Platte an einem mit einem unteren Montageprofil versehenen Rahmenelement dient, umfasst einen dem Halten der Platte dienenden Ankerbolzen, der beidseitig Ankerzapfen aufweist, die in Nuten gehalten sind, die innerhalb des Montageprofils einander gegenüberliegen. Erfindungsgemäss besteht die Platte aus zwei miteinander verbundenen Glasplatten, die wenigstens zwei zueinander korrespondierende Ausnehmungen aufweisen, in denen vorzugsweise zylinderförmige äussere Exzenterelemente vorzugsweise spielfrei gehalten sind, die exzentrisch angeordnete, zylindrische Öffnungen aufweisen, die nach der Montage konzentrisch zueinander ausgerichtet sind und vorzugsweise spielfrei den eingeführten Schaft eines inneren Exzenterelements halten, welcher eine exzentrisch angeordnete, vorzugsweise zylindrische Öffnung aufweist, in der der Ankerbolzen gehalten ist.

Nach der Montage wird die auf den Ankerbolzen einwirkende Kraft via das innere Exzenterelement gleichmässig auf die beiden äusseren Exzenterelemente und die beiden Glasplatten übertragen, so dass minimale Belastungen der Vorrichtungsteile und der Glasplatten resultieren.

Durch Drehung des inneren Exzenterelements kann der Abstand des Ankerbolzens vom Rahmenelement und somit die Höhe der Platte in einfacher Weise justiert werden. Dazu weist das innere Exzenterelement ein Kopplungselement, beispielsweise eine an einer Seite des Schafts vorgesehene Mehrkantmutter auf die mittels eines Justierwerkzeugs erfasst und gedreht wird. Für diesen Vorgang wird die Platte vorzugsweise leicht angehoben, so dass die Justierung unter Vermeidung einwirkender Kräfte vollzogen werden kann. Alternativ kann die Justierung vorgenommen werden, bevor die Platte aufgehängt wird.

In einer weiteren vorzugsweisen Ausgestaltung ist das Mittelteil des Ankerbolzens mit Rillen oder Zähnen versehen, die vorzugsweise nur unter Belastung der Platte in Rillen oder Zähne eingreifen, die innerhalb der Öffnung im Schaft des inneren Exzenterelements vorgesehen sind. Unter Last wird das innere Exzenterelement daher vom Ankerbolzen gehalten, der vorzugsweise beidseitig Ankerzapfen aufweist, die oben und/oder unten durch zwei parallele Gleitflächen begrenzt und somit drehfest in den im Rahmenelement vorgesehenen Nuten gehalten sind.

Die erfindungsgemässe Vorrichtung weist zahlreiche Vorteile auf. Mehrschichtige Glasplatten können einfach, schnell und präzise montiert und rasch justiert werden. Es resultiert eine formschlüssige, stabile und praktisch spielfreie Verbindung zwischen der Glasplatte und dem metallenen Tragprofil bzw. dem Rahmenelement, das normalerweise mit Laufwerken verbunden wird, die in Schienen verschiebbar geführt sind.

Die eingangs beschriebenen Vorteile von Verbund-Sicherheits-Glas werden in das Trennelement integriert. Die in den Verbund-Sicherheits-Gläsern integrierten Folien können nach Wunsch gestaltet werden.

Nachfolgend wird die Erfindung anhand von Zeichnungen näher erläutert. Dabei zeigt:
- Figur 1: eine erfindungsgemässe Vorrichtung mit zwei in Öffnungen 11a, 11b von Glasplatten 1a, 1b einer Verbundglasplatte 1 einführbaren äusseren Exzenterelementen 2a und 2b, die je eine exzentrisch angeordnete Öffnung 21a bzw. 21b aufweisen, in die der Schaft 31 eines mit einer Mehrkantmutter 32 versehenen inneren Exzenterelements 3 einführbar ist, der eine exzentrisch angeordnete Öffnung 311 aufweist in der ein mit dem Rahmenelement 5 verbindbarer Ankerbolzen 4 gelagert ist;
- Figur 2: die äusseren Exzenterelemente 2a und 2b von Figur 1;
- Figur 3: das innere Exzenterelement 3 von Figur 1;
- Figur 4: einen Schnitt durch die in einem Rahmenelement 5 montierte Vorrichtung von Figur 1, die mittels eines Werkzeugs 8 manuell justiert wird;
- Figur 5a: in räumlicher Darstellung, den Ankerbolzen 4 von Figur 1, der ein mit Längsrillen 411 oder Zähnen versehenes Mittelteil 41 aufweist, das zwei in Nuten 511 des Rahmenelements 5 einführbare, Gleitflächen 421 versehene Ankerzapfen 42 aufweist;
- Figur 5b: in räumlicher Darstellung, das innere Exzenterelement 3 von Figur 1, dessen Schaft 31 zu den Öffnungen 21a, 21b der äusseren Exzenterelemente 2a, 2b korrespondiert und mit einer Öffnung 311 mit nach innen gerichteten Rillen 3111 oder Zähnen versehen ist, mittels derer das eingesetzte Ankerelement 4 drehfest gehalten ist, sobald die Last der Platte 4 auf dieses einwirkt;
- Figur 5c: in räumlicher Darstellung, ein äusseres Exzenterelement 2a; 2b gemäss Figur 1;
- Figur 6: die Vorrichtung von Figur 1 mit dem Justierwerkzeug 8 sowie zwei mittels eines Werkzeugs 9 einführbare Keile 7, durch die das seitliche Spiel zwischen der Verbundglasplatte 1 und dem Rahmenelement 5 kompensiert wird; und
- Figur 7: einen Teil der Verbundglasplatte 1 von Figur 1 mit den sich teilweise überlappenden Ausnehmungen 11a und 11b der Glasplatten 1a, 1b, die mittels einer Folie 1c miteinander verbunden sind, auf der eine grafische Darstellung (LOGO) vorgesehen ist.

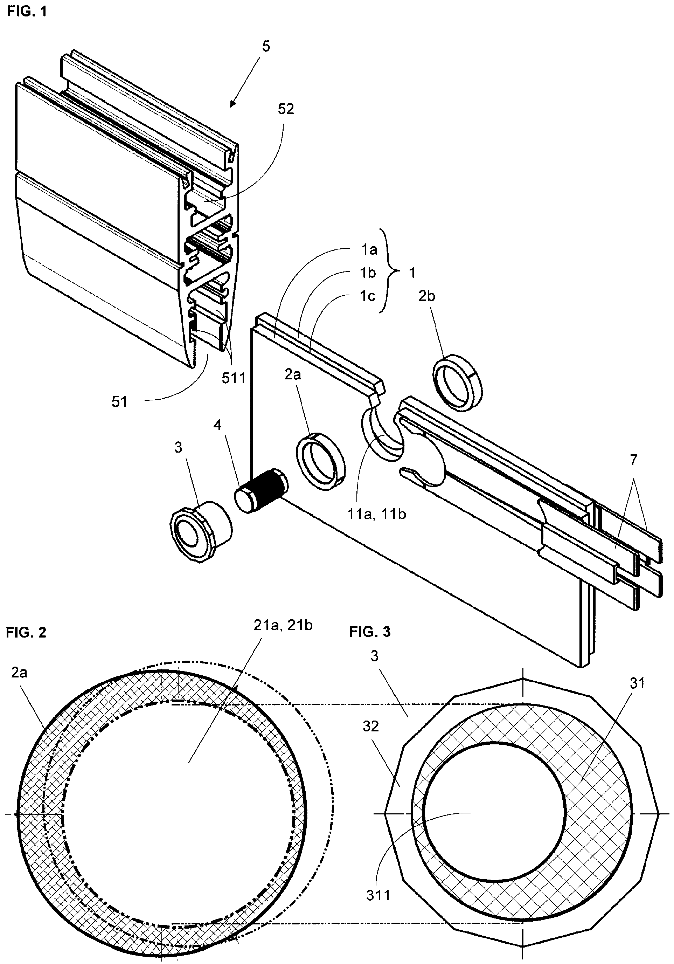

Figur 1 zeigt eine erfindungsgemässe Vorrichtung mit zwei Exzenterelementen 2a und 2b, die in gegeneinander verschobene Öffnungen 11a, 11b von Glasplatten 1a, 1b einer Verbundglasplatte 1 einsetzbar und dort vorzugsweise spielfrei gehalten sind. Die Exzenterelemente 2a und 2b weisen je eine exzentrisch angeordnete Öffnung 21a bzw. 21b auf, in die der Schaft 31 eines mit einer Mehrkantmutter 32 versehenen inneren Exzenterelements 3 einführbar ist. Nach dem Einsetzen der Exzenterelementen 2a und 2b werden diese daher soweit gegeneinander verdreht, bis deren Öffnungen 21a, 21b konzentrisch ausgerichtet und zur Aufnahme des Schafts 31, des inneren Exzenterelements 3 bereit sind, der eine exzentrisch angeordnete Öffnung 311 aufweist in der ein mit dem Rahmenelement 5 verbindbarer Ankerbolzen 4 gelagert wird. Nach dem Einführen der beschriebenen Vorrichtungsteile 2a, 2b, 3 und 4 sind diese in den Öffnungen 11a, 11b der beiden Glasplatten 1a, 1b daher formschlüssig und vorzugsweise spielfrei gehalten.

Figur 2 zeigt die zylinderförmigen äusseren Exzenterelemente 2a und 2b von Figur 1.

Figur 3 zeigt das innere Exzenterelement 3 von Figur 1.

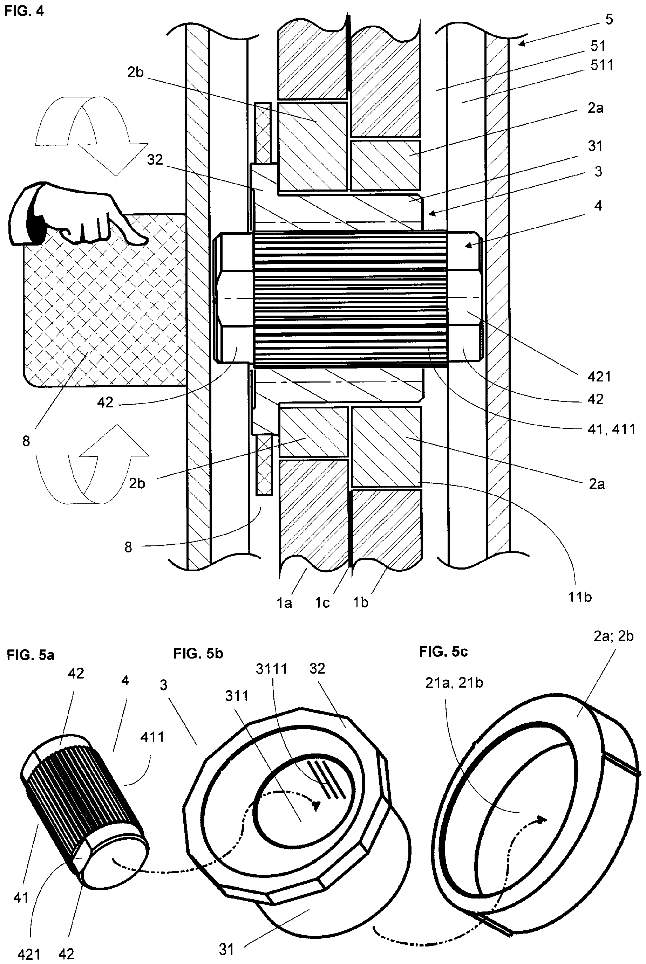

Figur 4 zeigt einen Schnitt durch die in einem Rahmenelement 5 montierte Vorrichtung von Figur 1, die mittels eines Werkzeugs 8 manuell justiert wird. Es ist ersichtlich, dass die beiden äusseren Exzenterelemente 2a, 2b in den Öffnungen 11a, 11b praktisch spielfrei gehalten sind. Der Schaft 31 des inneren Exzenterelements 3 wird hingegen vorzugsweise mit einem Spiel in den Öffnungen 21a, 21b der äusseren Exzenterelemente 2a, 2b gehalten, welches die Justierung bzw. Verdrehung des inneren Exzenterelements 3 beispielsweise mittels des Werkzeugs 8 erlaubt, falls die Last der Platte 1 kompensiert wird.

Figur 5a zeigt, in räumlicher Darstellung, den Ankerbolzen 4 von Figur 1, der ein mit Längsrillen 411 oder Zähnen versehenes Mittelteil 41 aufweist, das zwei in Nuten 511 des Rahmenelements 5 einführbare, Gleitflächen 421 versehene Ankerzapfen 42 aufweist.

Figur 5b zeigt, in räumlicher Darstellung, das innere Exzenterelement 3 von Figur 1, dessen Schaft 31 zu den Öffnungen 21a, 21b der äusseren Exzenterelemente 2a, 2b korrespondiert und mit einer Öffnung 311 mit nach innen gerichteten Rillen 3111 oder Zähnen versehen ist, mittels derer das eingesetzte Ankerelement 4 drehfest gehalten ist, sobald die Last der Platte 4 auf dieses einwirkt. Die in der Öffnung 311 vorgesehenen Rillen 3111 wirken dabei mit Längsrillen 411 oder Zähnen am Mittelteil 41 des Ankerelements 4 zusammen. Dabei können die Rillen 3111 in der Öffnung 311 während der Herstellung des Exzenterelements 3 vorgesehen oder erst nach der Montage des Ankerelements 4 durch dessen Längsrillen 411 eingeprägt werden.

Figur 5c zeigt in räumlicher Darstellung, ein äusseres Exzenterelement 2a; 2b gemäss Figur 1.

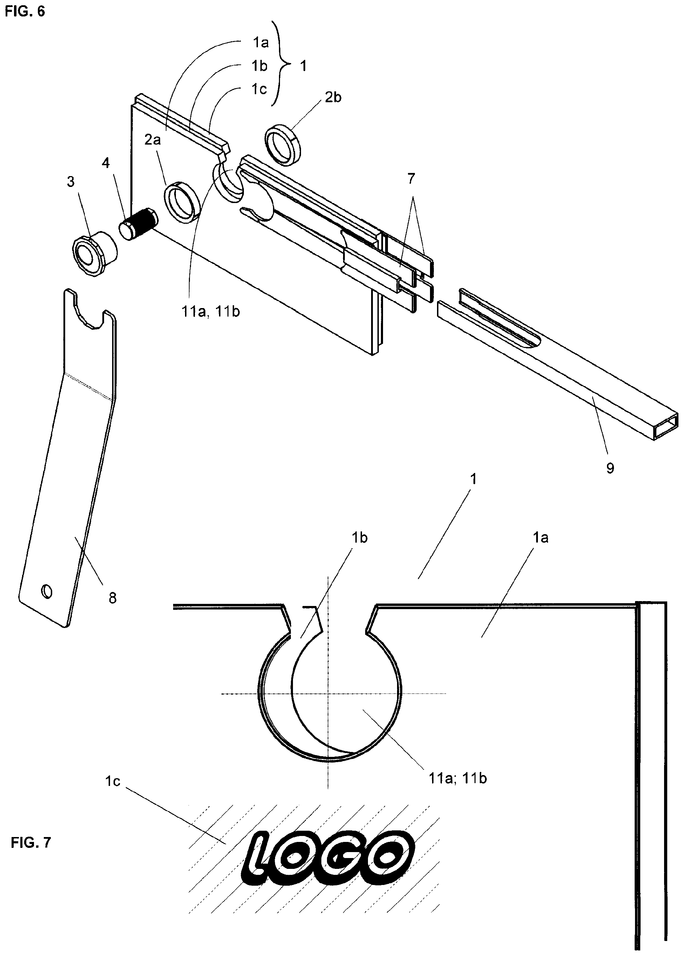

Figur 6 zeigt die Vorrichtung von Figur 1 mit dem Justierwerkzeug 8 sowie zwei mittels eines Werkzeugs 9 einführbare Keile 7, durch die das seitliche Spiel zwischen der Verbundglasplatte 1 und dem Rahmenelement 5 kompensiert wird.

Figur 7 zeigt einen Teil der Verbundglasplatte 1 von Figur 1 mit den sich teilweise überlappenden Ausnehmungen 11a und 11b der Glasplatten 1, 1b, die mittels einer Folie 1c miteinander verbunden sind, auf der eine grafische Darstellung (LOGO) vorgesehen ist.

Eine Platte 1 wird vorzugsweise wie folgt montiert.

Die Platte 1 wird horizontal auf Stützelementen gelagert. Dann werden die äusseren Exzenterelemente 2a, 2b in die Öffnungen 11a, 11b eingedrückt, die zumindest ein wenig Spiel haben. Nun werden die in den äusseren Exzenterelementen 2a, 2b vorgesehenen Öffnungen 21a, 21b ausgerichtet. Dann wird der Schaft 31 des inneren Exzenterelements 3 in die Öffnungen 21a, 21b eingeführt. In das innere Exzenterelement 3 wird der Ankerbolzen eingesetzt, über den dann das Rahmenprofil bzw. das Rahmenelement der geschoben wird, dass die Ankerzapfen 42 in die Nuten 511 eingeführt werden. Anschliessend wird die Justierung vorgenommen. Ferner werden die Keile 7 eingeführt. Auf der anderen Seite der Platte erfolgt das gleiche Vorgehen.

Sind beide Rahmenelemente verkeilt und auch seitlich zur vertikalen Glaskante eingemittet, so werden die Fugen zwischen dem Rahmenelement bzw. dem Tragglasprofil und der montierten Platte beidseitig mit Silikon abgedichtet.

### Literaturverzeichnis

[1] WO 98/59140 A1
[2] EP 0 586 840 A1

### Bezugszeichenliste:

- 1: Verbundglasplatte, insbesondere Verbund-Sicherheits-Glas VSG
- 1a, 1b: Glasplatten
- 1c: vorzugsweise vorgesehene Folie zwischen den Glasplatten 1a, 1b
- 11a, 11b: Ausnehmungen der Glasplatten 1a, 1b
- 2a, 2b: äussere Exzenterelemente
- 21a, 21b: Öffnungen oder Bohrungen in den äusseren Exzenterelementen
- 3: inneres Exzenterelement
- 31: Schaft des inneren Exzenterelements 3
- 311: Öffnung oder Bohrung im Schaft
- 3111: Rillen 3111 oder Zähne am Schaft 31
- 32: Kopplungselement bzw. Mehrkantmutter des inneren Exzenterelements 3
- 4: Ankerbolzen
- 41: Mittelteil des Ankerbolzens 4
- 411: Längsrillen 411 oder Zähne am Mittelteil 41
- 42: Ankerzapfen 42 des Ankerbolzens 4
- 421: Gleitflächen 421 der Ankerzapfen 42
- 5: Rahmenelement
- 51: unteres Montageprofil im Rahmenelement 5 für die Aufnahme der Platte 1
- 511: Nuten 511 im unteren Montageprofil 51
- 52: oberes Montageprofil im Rahmenelement 5 für die Aufnahme eines Montageblocks, der mit einem in einer Schiene geführten Laufwerk verbindbar ist
- 7: Arretierkeile
- 8: Justierwerkzeug
- 9: Werkzeugs zum Einschlagen der Keile 7

## Patentansprüche

1. Vorrichtung zur justierbaren Befestigung einer Platte (1), die zwei miteinander verbundenen Glasplatten (1a, 1b) umfasst, die wenigstens zwei zueinander korrespondierende Ausnehmungen (11a, 11b) aufweisen, an einem mit einem unteren Montageprofil (51) versehenen Rahmenelement (5), mit einem dem Halten der Platte (1) dienenden Ankerbolzen (4), der beidseitig Ankerzapfen (42) aufweist, die in Nuten einführbar sind, die innerhalb des Montageprofils (51) einander gegenüberliegen, und der zwei vorzugsweise zylinderförmige äussere Exzenterelemente (2a, 2b) exzentrisch trägt, die je in eine der beiden Ausnehmungen (11a 11b) vorzugsweise spielfrei einsetzbar sind und die zylindrische Öffnungen (21a, 21b) aufweisen, **dadurch gekennzeichnet, dass** in den zylindrischen Öffnungen (21a, 21b) der äusseren Exzenterelemente (2a, 2b), die nach der Montage konzentrisch zueinander ausgerichtet sind, vorzugsweise spielfrei ein darin eingeführter Schaft (31) eines inneren Exzenterelements (3) gehalten ist, welcher eine exzentrisch angeordnete, vorzugsweise zylindrische Öffnung (311) aufweist, in der der Ankerbolzen (4) gehalten ist und, dass das innere Exzenterelement (3) wenigstens an einer Seite des Schafts (31) ein Kopplungselement (32), wie eine Mehrkantmutter aufweist, das zu einem Justierwerkzeug korrespondiert.

2. Vorrichtung nach Anspruch 1, **dadurch gekennzeichnet, dass** das Mittelteil (41) des Ankerbolzens (4) mit Rillen oder Zähnen (411) versehen ist, die vorzugsweise nur unter Belastung der Platte (1) in Rillen oder Zähne (3111) eingreifen, die gegebenenfalls innerhalb der Öffnung (31) im Schaft (31) des inneren Exzenterelements (3) vorgesehen sind oder durch die Rillen oder Zähnen (411) des Ankerbolzens (4) selbst eingeprägt werden.

3. Vorrichtung nach Anspruch 2, **dadurch gekennzeichnet, dass** zwischen der Mantelfläche des Mittelteils (41) des Ankerbolzens (4) und der Innenfläche (3111) der Öffnung (311) im Schaft (31) des inneren Exzenterelements (3) Spiel vorhanden ist, welches erlaubt, das innere Exzenterelement (3) gegenüber dem im Rahmenelement (5) gehaltenen Ankerbolzen (4) zu drehen.

4. Vorrichtung nach einem der Ansprüche 1-3, **dadurch gekennzeichnet, dass** der Schaft (31) des inneren Exzenterelements (3) innerhalb der Öffnungen (21a, 21b) der äusseren Exzenterelemente (2a, 2b) praktisch spielfrei gehalten ist.

5. Vorrichtung nach einem der Ansprüche 1-4, **dadurch gekennzeichnet, dass** das innere und die äusseren Exzenterelemente sowie das Ankerelement (4) aus Kunststoff oder gegebenenfalls beschichtetem Metall gefertigt sind.

6. Vorrichtung nach einem der Ansprüche 1-5, **dadurch gekennzeichnet, dass** mindestens einer der Ankerzapfen (42) oben und unten durch zwei parallele Gleitflächen (421) begrenzt ist.

7. Vorrichtung nach einem der Ansprüche 1-6, **dadurch gekennzeichnet, dass** die Glassplatte (1) eine Verbund-Sicherheits-Glas-Platte mit einer zwischen den Glasplatten (1a,1b) gehaltenen Folie (1c) ist, die vorzugsweise bedruckt ist.

8. Vorrichtung nach einem der Ansprüche 1-7, **dadurch gekennzeichnet, dass** zwischen den äusseren Seiten der Trennelemente (1a und 1b) und der angrenzenden Seite des Montageprofils (51) Keile (7) eingeführt sind, welche die Platte (1) stabil und vorzugsweise zentriert innerhalb des Montageprofils (51) halten.

9. Trennelement mit einem vorzugsweise metallenen Rahmenelement (5), welches mittels wenigstens einer, vorzugsweise zwei Vorrichtungen gemäss einem der Ansprüche 1 bis 9 mit einer Platte (1) vorzugsweise einer Verbund-Sicherheits-Glas-Platte verbunden ist, welche vorzugsweise eine bedruckte Folie (1c) zwischen zwei Glasplatten (1a, 1b) aufweist.

10. Trennelement nach Anspruch 9, **dadurch gekennzeichnet, dass** das Rahmenelement (5) ein unteres, dem Halten der Platte (1) dienendes unteres Montageprofil (51) und ein oberes Montageprofil (52) aufweist, mittels dessen das Trennelement mit wenigstens einem in einer Laufschiene geführten Laufwerk verbunden ist.

## Claims

1. Device for adjustable fixing of a panel (1), which comprises two glass plates (1a, 1b) connected to one another, which comprise at least two recesses (11a, 11b) that correspond to one another, to a frame element (5) provided with a lower assembly profile (51), with an anchoring bolt (4) serving to hold the panel (1) which comprises anchoring pins (42) on both sides which are insertable into grooves which lie opposite each other within the assembly profile (51), and which eccentrically holds two cylindrical outer eccentric elements (2a, 2b), which are insertable each in one of the cylindrical openings (21a, 21b) preferably without play , which comprise cylindrical openings (21a, 21b), **characterised in that** in the cylindrical openings (21a, 21b) of the outer eccentric elements (2a, 2b), which are orientated concentrically with each other after assembly, a shaft (31) of an inner eccentric element (3) is held inserted therein preferably without play, which comprises an eccentrically arranged, preferably cylindrical opening (311), in which the anchoring bolt (4) is held and that the inner eccentric element (3) comprises on at least one side of the shaft (31) a coupling element (32), such as a polygonal nut, which corresponds to an adjusting tool.

2. Device according to claim 1, **characterised in that** the central part (41) of the anchoring bolt (4) is provided with grooves or teeth (411) which engage preferably only under the load of the panel (1) into grooves or teeth (3111) which are possibly provided within the opening (31) in the shaft (31) of the inner eccentric element (3) or are formed by the grooves or teeth (411) of the anchoring bolt (4) itself.

3. Device according to claim 2, **characterised in that** there is clearance between the shell surface of the central part (41) of the anchoring bolt (4) and the inner surface (3111) of the opening (311) in the shaft (31) of the inner eccentric element (3), which allows the inner eccentric element (3) to rotate in relation to the anchoring bolt (4) held in the frame element (5).

4. Device according to one of the claims 1-3, **characterised in that** the shaft (31) of the inner eccentric element (3) is held practically without play within the openings (21a, 21b) of the outer eccentric elements (2a, 2b).

5. Device according to one of the claims 1-4, **characterised in that** the inner and the outer eccentric elements and also the anchoring element (4) are produced from plastic or possibly coated metal.

6. Device according to one of the claims 1-5, **characterised in that** at least one of the anchoring pins (42) is upwardly and downwardly defined by two parallel sliding surfaces (42).

7. Device according to one of the claims 1-6, **characterised in that** the glass panel (1) is a composite safety glass panel with a film (1c) held between the glass panels (1a, 1b) which is preferably printed.

8. Device according to one of the claims 1-7, **characterised in that** wedges (7) are introduced between the outer sides of the separation elements (1a and 1b) and the adjacent side of the assembly profile (51), which hold the panel (1) stable and preferably centred within the assembly profile (51).

9. Separation element with a preferably metal frame element (5) which is connected by means of at least one, preferably two devices according to one of the claims 1 to 9 to a panel (1), preferably a composite safety glass panel, which preferably comprises a printed film (1c) between two glass plates (1a, 1b).

10. Separation element according to claim 9, **characterised in that** the frame element (5) comprises a lower assembly profile (51) serving to hold the panel (1) and an upper assembly profile (52), by means of which the separation element is connected to at least one carriage guided in a running rail.

## Revendications

1. Dispositif pour la fixation ajustable d'une plaque (1), qui comprend deux plaques en verre (1a, 1b) liées ensemble, qui présentent au moins deux évidements (11a 11b) correspondants l'un à l'autre, à un élément de cadre (5) présentant un profil de montage inférieur (51), avec un boulon d'ancrage (4) destiné à tenir la plaque (1), ledit boulon d'ancrage (4) présentant des deux côtés des pivots d'ancrage (42), qui peuvent être insérés dans des rainures à l'intérieur du profilé de montage (51) opposées l'une à l'autre, et qui porte de manière excentrique deux éléments excentriques extérieurs (2a, 2b) qui ont de préférence une forme de cylindre et qui peuvent chacun être insérés de préférence sans jeu dans un des évidements (11a, 11b) et qui présentent des ouvertures cylindriques (21a, 21b), **caractérisé en ce que** dans les ouvertures cylindriques (21a, 21b) des éléments excentriques extérieures (2a, 2b), qui sont orientés de manière concentrique après l'assemblage, une tige (31) d'un élément excentrique interne (3) inséré là-dedans est tenu de préférence sans jeu, ladite tige (31) présentant une ouverture (311) excentrique de préférence en forme de cylindre, dans laquelle le boulon d'ancrage (4) est tenu, et que l'élément excentrique interne (3) présente au moins d'un côté de la tige (31) un élément d'accouplement (32), comme un écrou, qui correspond à un outil d'ajustement.

2. Dispositif selon la revendication 1, **caractérisé en ce que** la pièce de milieu (41) du boulon d'ancrages (4) présente des rainures ou des dents (411), qui interviennent, de préférence seulement lors d'application de charge à la plaque (1), dans des rainures ou dents (3111), qui sont éventuellement prévues à l'intérieur de l'ouverture (31) de la tige (31) de l'élément excentrique interne (3) ou qui sont formées par les rainures ou dents (411) du boulon d'ancrage (4) lui-même.

3. Dispositif selon la revendication 2, **caractérisé en ce qu'**il y a du jeu entre la surface d'enveloppe de la pièce du milieu (41) du boulon d'ancrage (4) et la surface interne (3111) de l'ouverture (311) dans la tige (31) de l'élément excentrique interne (3), ce jeu permettant de tourner l'élément excentrique interne (3) par rapport au boulon d'ancrage (4) tenu dans l'élément de cadre (5).

4. Dispositif selon une des revendications 1-3, **caractérisé en ce que** la tige (31) de l'élément excentrique interne (3) est tenu quasiment sans jeu dans les ouvertures (21a, 21b) des éléments excentriques extérieurs (2a, 2b).

5. Dispositif selon une des revendications 1-4, **caractérisé en ce que** l'élément excentrique interne et les éléments excentriques externes et le boulon d'ancrage (4) sont formés d'un plastique ou éventuellement d'un métal revêtu.

6. Dispositif selon une des revendications 1-5, **caractérisé en ce qu'**au moins un des pivots d'ancrage (42) est limité en haut et en bas par deux surfaces de glissement (421) parallèles.

7. Dispositif selon une des revendications 1-6, **caractérisé en ce que** la plaque en verre (1) est une plaque de verre de sécurité feuilleté avec un film (1c), qui est de préférence imprimé, tenu entre des plaques en verre (1a, 1b).

8. Dispositif selon une des revendications 1-7, **caractérisé en ce que** des cales (7) sont insérées entre la face extérieure des élément de séparation (1a et 1b) et la face voisinant du profil de montage (51), lesdites cales (7) tenant la plaque (1) stablement et de préférence centrée à l'intérieur du profil de montage (51).

9. Élément de séparation avec un élément de cadre (5) de préférence métallique, qui est connecté par au moins un, de préférence deux dispositifs selon une des revendications 1 à 9 à une plaque (1), de préférence une plaque de verre de sécurité feuilleté, qui présente de préférence un film (1c) avec une impression entre deux plaques en verre (1a, 1b).

10. Élément de séparation selon la revendication 9, **caractérisé en ce que** l'élément de cadre (5) présente un profil de montage intérieur (51), pour tenir la plaque (1), et un profil de montage supérieur (52), par lequel l'élément de séparation est connecté à au moins un chariot guidé dans un rail.
